# EUROPÄISCHE PATENTSCHRIFT

(11) **EP 0 584 310 B1**
(45) Veröffentlichungstag und Bekanntmachung des Hinweises auf die Patenterteilung: **08.07.1998**
(21) Anmeldenummer: 93903809.7
(22) Anmeldetag: 19.02.1993
(51) Int. Cl.: G08G 1/09, G08G 1/0968, G01C 21/20

(54) **VERKEHRSRUNDFUNKEMPFÄNGER**
ROAD TRAFFIC RADIO RECEIVER
RECEPTEUR DE RADIODIFFUSION POUR LA CIRCULATION ROUTIERE

(30) Priorität: 13.03.1992 DE 4208277
(43) Veröffentlichungstag der Anmeldung: 02.03.1994
(73) Patentinhaber: ROBERT BOSCH GMBH, 70442 Stuttgart (DE)
(72) Erfinder: BRAEGAS, Peter, D-3200 Hildesheim (DE)
(86) Internationale Anmeldenummer: DE9300145
(87) Internationale Veröffentlichungsnummer: WO9318495

(56) Entgegenhaltungen:
- EP-A- 0 367 935
- EP-A- 0 369 539
- EP-A- 0 384 794
- WO-A-88/04029
- DE-A- 3 810 180

## Beschreibung

Die Erfindung betrifft einen Verkehrsrundfunkempfänger mit einem ersten Speicher zum Zuordnen von durch die Verkehrsnachrichten empfangenen Adressen zu Segmenten eines Straßennetzes und mit einer Wiedergabeeinrichtung für die empfangenen kodierten Signale der Verkehrsnachrichten in klar verständlicher Form.

Derartige Verkehrsrundfunkempfänger sind beispielsweise durch DE 38 10 179 A1 und 38 10 180 A1 bekannt. Diese Rundfunkempfänger sind geeignet, standardisiert kodierte Verkehrsnachrichten zu empfangen. Die kodierte Verkehrsnachricht enthält dabei eine Adresse für einen Ort, insbesondere ein Segment eines Straßennetzes, das von der Verkehrsnachricht betroffen ist. In dem Empfänger ist ein erster Speicher vorgesehen, der eine Korrelation zwischen den kodierten Adressen und den Namen. der Segmente enthält, die in einer Wiedergabeeinrichcung im Klartext optisch wiedergegeben werden. Es können weitere Speicher vorgesehen sein, mit denen Adressen für Sachangaben oder Ereignisse diesen Sachangaben oder Ereignissen in einer im Klartext wiedergebbaren Form zugeordnet werden.

Durch die DE 37 54 516 A1 ist ferner ein Verfahren zur fahrtroutenselektiven Wiedergabe von Verkehrsnachrichten bekannt, durch das es möglich ist, nur solche Verkehrsnachrichten auszugeben, die auf einer bestimmten Fahrtroute liegen. Voraussetzung hierbei ist, daß die Fahrtroute mit allen Streckenabschnitten in das entsprechende Gerät eingegeben wird. Die Fahrtroute muß somit vorher in allen Segmenten in eingebbarer Form bekannt sein. Der Bedienaufwand für dieses Verfahren ist somit erheblich.

Der Erfindung liegt die Aufgabe zugrunde, einen Verkehrsrundfunkempfänger der eingangs erwähnten Art einer weiteren Nutzung zuzuführen.

Zur Lösung dieser Aufgabe ist ein Verkehrsrundfunkempfänger der eingangs erwähnten Art gekennzeichnet durch eine Zusatzeinrichtung mit einem zweiten Speicher für Fahrparameter der im ersten Speicher abgespeicherten Segmente und Adressen für an das jeweilige Segment anschließende Segmente, mit einer Eingabeeinrichtung für wenigstens eine Zielpunkteingabe, die einem abgespeicherten Segment zuzuordnen ist, mit einem Rechner zur Ermittlung der optimalen Strecke zum Zielpunkt und mit einem dritten Speicher, in dem die zu der vom Rechner ermittelten optimalen Strecke gehörenden Segmente abspeicherbar sind.

Der Erfindung liegt die Erkenntnis zugrunde, daß in den Verkehrsrundfunkempfängern der bekannten Art notwendigerweise eine Tabelle der Segmente des Straßennetzes enthalten sein muß, und zwar in einer im Klartext wiedergebbaren Form. Durch die erfindungsgemäße Zusatzeinrichtung liegen zu den im Verkehrsrundfunkempfänger bereits abgespeicherten Segmenten Zusatzinformationen über diese Segmente vor, nämlich wenigstens ein Fahrparameter für jedes Segment sowie die Verknüpfung der Segmente untereinander. Mit diesen Zusatzinformationen läßt sich der Verkehrsrundfunkempfänger zu einer Fahrtroutensuche ausnutzen, indem der gewünschte Zielpunkt in einer in dem abgespeicherten Segment zuzuordnenden Form eingebbar ist und das Zusatzgerät über einen Rechner verfügt, der aus den vorhandenen Informationen über die Verknüpfung der Segmente untereinander eine bezüglich der eingegebenen Fahrparameter, insbesondere Länge der Segmente, optimierte Route ermittelt. Als Optimierungsalgorithmus kommt beispielsweise der Ford-Moore-Algorithmus in Frage.

Die Zusatzeinrichtung kann in einer bevorzugten Ausführungsform in Form einer in den Verkehrsrundfunkempfänger einschiebbaren und auswechselbaren Chipkarte ausgebildet sein. In dieser Form ist es möglich, die Klartextwiedergabe der Segmente in einer für den Bediener geeigneten Sprache vorzunehmen, auch wenn ein Streckennetz eines anderssprachigen Landes betroffen ist. Ferner ist es möglich, mit einer solchen Chipkarte ein bisher nicht im Verkehrsrundfunkempfänger abgelegtes Streckennetz für den Verkehrsrundfunkempfänger zugänglich zu machen, so daß entsprechende Zuordnungen von Verkehrsnachrichten zu Segmenten dieses Streckennetzes erfolgen können.

Die Routensuche mit dem erfindungsgemäßen Verkehrsrundfunkgerät mit Zusatzeinrichtung erfordert die Erkennung eines Startpunktes und die Eingabe eines Zielpunktes. Der Startpunkt kann gegebenenfalls von dem Verkehrsrundfunkempfänger automatisch aus der Tabelle der empfangbaren Sender ermittelt werden, wenn der Verkehrsrundfunkempfänger die von den Sendern ausgesandten Identifikationsdaten dekodiert (RDS-Empfänger). Alternativ dazu ist es selbstverständlich möglich, den Startpunkt in einer geeigneten Weise in das Gerät einzugeben. Die Eingabe kann durch unmittelbare Eingabe der Adresse des Startsegments und des Zielsegments erfolgen. Im allgemeinen wird es jedoch zweckmäßig sein, Start- und Zielort durch eine übliche Eingabe, beispielsweise der nächstgrößeren Stadt eingebbar zu machen und in der Vorrichtung eine Zuordnungseinrichtung vorzusehen, die die Zuordnung zu dem betreffenden abgespeicherten Segment herstellt. Die Zuordnungseinrichtung kann dabei die Form einer abgespeicherten Tabelle aufweisen, in der zu möglichen Start- und Zielpunktangaben ein jeweils zugehöriges Segment abgespeichert ist.

Wird der Startort von dem Verkehrsrundfunkempfänger durch eine automatische Standortermittlung erfaßt, muß diese Standortinformation ebenfalls mit einer Zuordnungseinrichtung einem abgespeicherten Segment zugeordnet werden. Gegebenenfalls kann es dabei erforderlich sein, aus zu einem Ort zugeordneten zwei oder mehr Segmenten auszuwählen, beispielsweise in Abhängigkeit von der groben Himmelsrichtung, die zum Zielort führt. Dadurch wird dem Umstand Rechnung getragen, daß je nach Zielrichtung unterschiedliche Fahrtstreckensegmente einem Startort zuzuordnen sind.

Aufgrund der in der Vorrichtung bekannten Start- und Zielsegmente kann der Rechner eine optimale Strecke ermitteln und die zu dieser Strecke gehörenden Segmente in der richtigen Reihenfolge in dem dritten Speicher abspeichern. Zweckmäßigerweise wird neben der ermittelten optimalen Strecke wenigstens die nächstbeste Strecke ebenfalls abgespeichert. Der dritte Speicher kann dabei in einer bevorzugten Ausführungsform so ausgebildet sein, daß bereits durchfahrene Segmente der Strecke aus dem Speicher löschbar sind.

Die erfindungsgemäße Vorrichtung erlaubt mit einem geringen Geräteaufwand eine Routenbestimmung aufgrund der Informationen über den Start- und den Zielpunkt. Der Fahrer benötigt daher keine Kenntnisse über die vom Start- zum Zielpunkt führenden Segmente. Zweckmäßigerweise können diese Segmente in Form ihrer Adressen oder in einer unverschlüsselten Wiedergabe in einer Wiedergabeeinrichtung dem Fahrer übermittelt werden, so daß der Fahrer von der Vorrichtung Anweisungen über zu durchfahrende Segmente (beispielsweise Autobahn A7 bis zum Kirchheimer Dreieck) erhalten kann. Dabei ist es zweckmäßig, wenn der Fahrer bereits durchfahrene Segmente aus dem Speicher löscht oder die Löschung durch die Ortungsfunktion des Geräts automatisch durchgeführt wird.

Die Ermittlung der optimalen Strecke kann unter dem Kriterium der kürzesten Weglänge erfolgen. Da manche Streckenabschnitte neuralgische, störungsanfällige Abschnitte sind, kann es zweckmäßig sein, die Länge der Streckenabschnitte mit einem Bewertungsfaktor zu versehen, da die Länge dieses Segments erfahrungsgemäß eine größere Fahrzeit benötigt, als eine gleiche Länge eines anderen Segments. Die Ermittlung der optimalen Strecke kann daher unter dem Kriterium der Minimierung der Summenwerte der Produkte aus der jeweiligen Streckenlänge mit dem Bewertungsfaktor vorgenommen werden. Dabei ist es möglich, die Länge des jeweiligen Segments multipliziert mit dem Bewertungsfaktor in dem dritten Speicher abzuspeichern. Es kann allerdings vorteilhaft sein, den Bewertungsfaktor eingebbar oder aus einem vierten Speicher abrufbar zu gestalten. Dabei können in dem vierten Speicher mehrere Bewertungsfaktoren für jedes Segment in Abhängigkeit von typischen Gegebenheiten, wie Reisezeit, Reisetag, Wetterlage o.ä. abgespeichert sein. Dieser Ausbildung der Vorrichtung liegt die Erkenntnis zugrunde, daß die Fahrzeit für bestimmte Segmente sich regelmäßig nur dann verlängert, wenn ein hohes Verkehrsaufkommen, beispielsweise zu Beginn oder am Ende der Ferienreisezeit zu verzeichnen ist oder wenn besonders schwierige Wetterbedingungen vorherrschen.

Die erfindungsgemäße Vorrichtung erlaubt somit die Bestimmung einer optimalen Reiseroute mit einem geringen Geräteaufwand, der weit unter dem eines bekannten Navigationssystems liegt.

Besonders vorteilhaft läßt sich die erfindungsgemäße Vorrichtung in Verbindung mit einem Verkehrsrundfunkempfänger verwenden, der ein zusätzliches Empfangsteil für einen separaten Verkehrsfunkkanal aufweist. Dadurch ist es möglich, die empfangenen Verkehrsnachrichten, die die in dem dritten Speicher abgespeicherten Segmente betreffen, im Empfänger abzuspeichern und von der Torschaltung zeitnah vor dem Befahren des betreffenden Segments zur Wiedergabeeinrichtung durchzuschalten.

Die in standardisierter Form empfangenen Verkehrsnachrichten können zweckmäßigerweise im Rechner zur Überprüfung der ermittelten optimalen Strecke verarbeitet werden. Dies kann beispielsweise dadurch geschehen, daß mit der in standardisierter Form empfangenen Verkehrsnachricht der Bewertungsfaktor für den betreffenden Streckenabschnitt veränderbar ist.

Die erfindungsgemäße Vorrichtung zur Routenbestimmung erlaubt daher in Verbindung mit modernen Verkehrsrundfunkempfängern eine Vielzahl von Anwendungen, die mit einem geringen Geräteaufwand realisierbar sind.

Die Erfindung wird im folgenden anhand eines in der Zeichnung dargestellten Ausführungsbeispiels näher erläutert. Es zeigen:
- Figur 1 -: ein Blockschaltbild eines Verkehrsrundfunkempfängers mit einer erfindungsgemäßen Zusatzeinrichtung
- Figur 2 -: eine beispielhafte grafische Darstellung eines Streckennetzes, für das wenigstens ein Fahrparameter jedes Segments und die Verknüpfung der Segmente untereinander in einem zweiten Speicher einer Zusatzeinrichtung abspeicherbar ist
- Figur 3 -: ein Flußdiagramm zur Erläuterung der Funktion der erfindungsgemäßen Vorrichtung
- Figur 4 -: eine schematische Darstellung des Aufbaus einer Ortskodierung

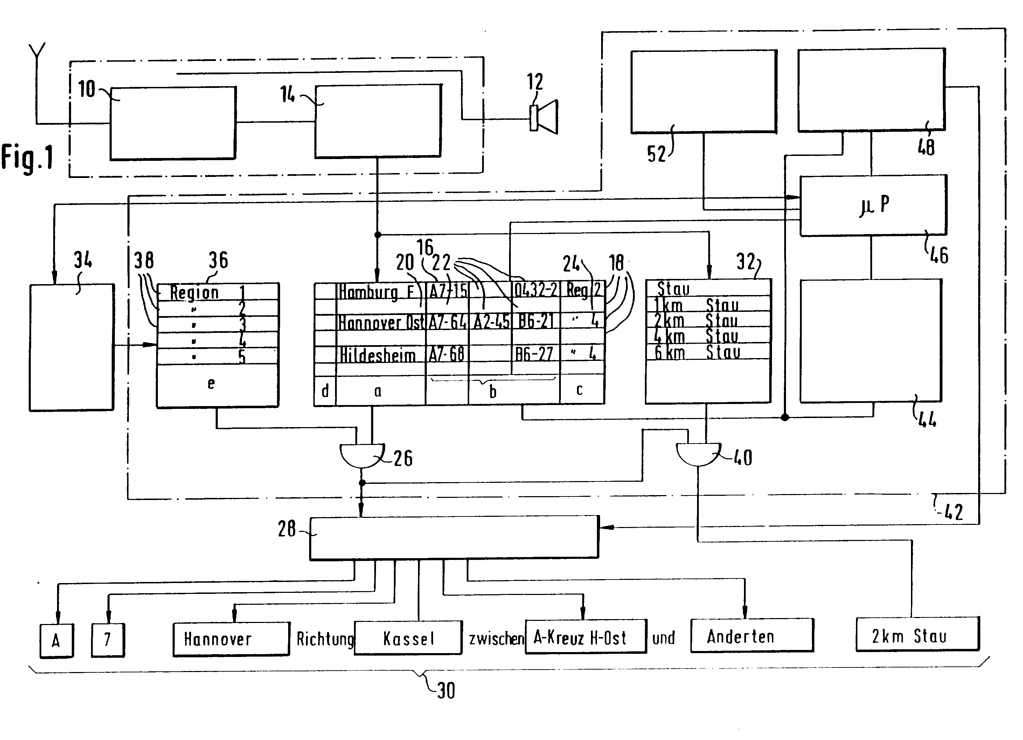

Figur 1 zeigt einen Verkehrsrundfunkempfänger mit einem Empfangsteil 10, dessen Ausgang für normale Rundfunksignale mit einem Lautsprecher 12 verbunden ist. An das Empfangsteil 10 ist ein Dekoder 14 angeschlossen, der zur Dekodierung digital kodiert empfangener Verkehrsnachrichten dient. Der Dekoder 14 ist mit einer Speichereinrichtung 16 über eine Adressleitung verbunden. Die Speichereinrichtung 16 enthält über Adressen auswählbare Speicherfelder 18, in denen Speicherplätze 20, 22 und 24 vorhanden sind.

Der Ausgang der Speichereinrichtung 16 führt über ein logisches Verknüpfungsglied 26 zu einem Demultiplexer 28, der sich auf eine Wiedergabeeinrichtung 30, hier in Form einer optischen Ausgabeeinrichtung, verzweigt.

Neben dem ersten Speicher 16, der Informationen über Segmente des Streckennetzes enthält, die durch übertragene und mit Hilfe des Dekodierers 14 dekodierte Adressen aufrufbar sind, ist ein Ereignisspeicher 32 vorgesehen, dessen Adresseingänge ebenfalls vom Dekoder 14 angesteuert sind und dessen Ausgang zu einem weiteren Feld der Ausgabeeinrichtung 30 führt.

Eine Einschränkung der streckenspezifischen Merkmale ist durch eine Eingabeeinrichtung 34 möglich. Dieser Eingabeeinrichtung 34 ist ein Speicher 36 nachgeschaltet, dessen Ausgang zu einem weiteren Eingang des logischen Verknüpfungsglieds 26 führt.

Der erste Speicher 16 ist so organisiert, daß über Adressen d Speicherfelder 18 adressiert werden. Die Adressierung erfolgt hier über Daten, die den Dekoder 14 verlassen.

Die Speicherfelder 18 sind unterteilt in Speicherplätze 20 für Ortsnamen a, Speicherplätze 22 für andere streckenspezifische Merkmale b, wie Autobahnen oder Bundesstraßen mit Abfahrtzahlen, und Speicherplätzen 24 mit Regionkennungen c.

Die Speichereinrichtung 36 ist ähnlich organisiert, besitzt jedoch weniger Speicherkapazität. Neben der Möglichkeit, streckenspezifische Merkmale, wie Autobahnabschnitte, auszuwählen, die nicht dargestellt sind, besitzt die Speichereinrichtung 36 Speicherplätze 38 mit Regionkennungen e.

Durch Auswählen über eine Betätigung der Eingabeeinrichtung 34 läßt sich z. B. eine Region e auswählen, wobei die Daten dann mit den Daten der Region c aus dem ersten Speicher 16 verglichen werden und über das logische Verknüpfungsglied 26 nur bei Übereinstimmung an den Demultiplexer 28 gelangen.

Gleichzeitig wird das im Ereignisspeicher 32 aufgerufene Ereignis dann freigegeben und über das logische Verknüpfungsglied 40 zur Ausgabeeinrichtung 30 weitergeleitet.

Der bisher beschriebene herkömmliche Verkehrsrundfunkempfänger weist eine Zusatzeinrichtung 42 in Form einer Chipkarte auf, die vorzugsweise auch die Speicher 16, 32, 36 umfaßt. In dieser Zusatzeinrichtung ist ein zweiter Speicher 44, ein Rechner 46 und ein dritter Speicher 48 vorhanden. An den Rechner 46 ist ferner die Eingabeeinrichtung 34 angeschlossen.

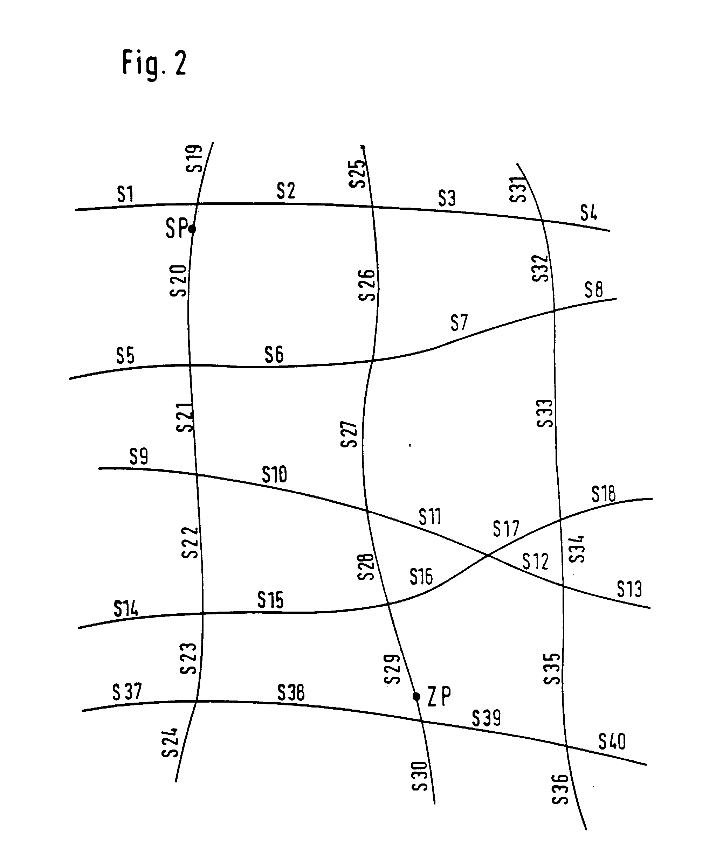

Der zweite Speicher 44 enthält Informationen über die Verknüpfung der in dem ersten Speicher 16 bereits gespeicherten Segmente des Streckennetzes sowie als einfachsten Fahrparameter die Länge der jeweiligen Segmente. Die Verknüpfung der Segmente wird anhand der Figur 2 noch näher erläutert werden.

Der zweite Speicher 44 der Zusatzeinrichtung 42 ist mit dem ersten Speicher 16 des Verkehrsrundfunkempfängers in Verbindung und benötigt somit nur die Adressen der Segmente des Streckennetzes, da die Zuordnung der Adressen zu den Segmenten im ersten Speicher 16 enthalten ist.

An den zweiten Speicher 44 ist ein Rechner 46 angeschlossen, der nach Eingabe eines Zielpunktes und gegebenenfalls Startpunktes mit Hilfe des Ford-Moore-Algorithmus eine optimale Strecke ermittelt und die so ermittelte optimale Strecke in einem dritten Speicher 48 ablegt.

Die so ermittelte optimale Strecke kann von dem dritten Speicher 48 zur Ausgabeeinrichtung 28, 30 weitergeleitet werden, die vorzugsweise auch aus einem Sprachsynthesizer und einem Lautsprecher bestehen kann, so daß die Verkehrsmeldungen und die ermittelte Route akustisch in normaler Sprache wiedergegeben werden.

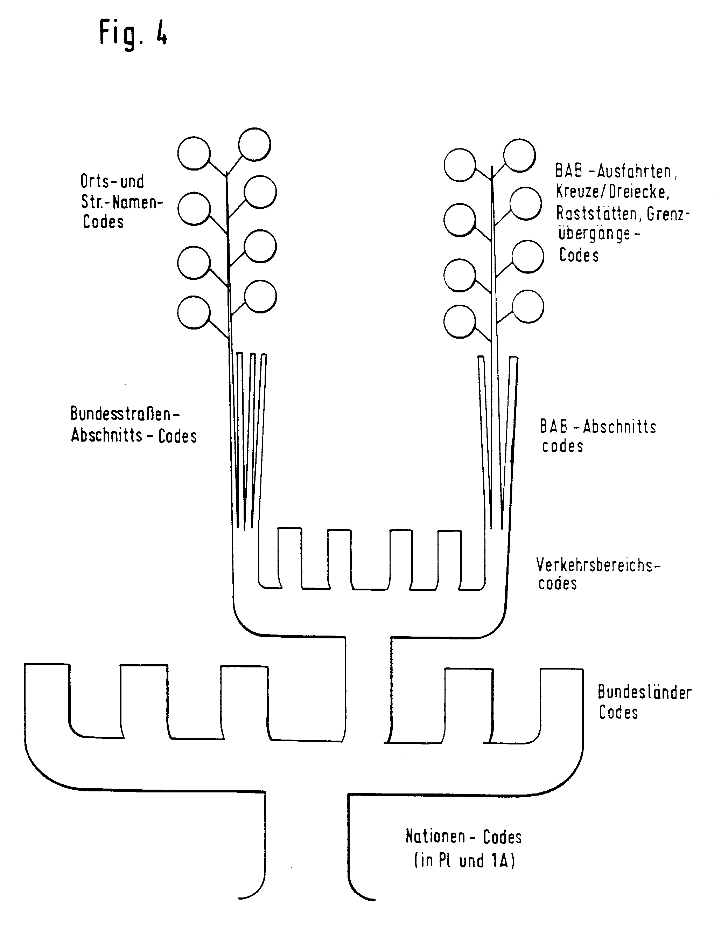

Mit der Eingabevorrichtung 34 kann die Eingabe des Zielpunkts und des Startpunkts erfolgen. Durch die in dem ersten Speicher 16 abgelegten Informationen können die gegebenenfalls nicht in Form der Adressen der Segmente eingegebenen Ortsangaben einem im zweiten Speicher 44 abgespeicherten Segment zugeordnet werden, was anhand der Fig. 4 noch erläutert werden wird.

Mit dem Rechner 46 ist ferner ein vierter Speicher 52 verbunden, der gegebenenfalls mehrere abrufbare Bewertungsfaktoren für die im zweiten Speicher 44 abgespeicherten Segmente enthält.

Figur 2 zeigt ein Beispiel für ein Streckennetz, dessen 40 Segmente S1 bis S40 in dem zweiten Speicher 44 zur Routenbestimmung abgespeichert sind, und zwar mit ihren Adressen S1 bis S40, beispielsweise ihren jeweiligen Längen als Fahrparameter und mit Adressen von anschließenden Segmenten. Betrachtet man bespielsweise das Segment S20 in dem dargestellten Ausführungsbeispiel, so ist es einerseits mit den Segmenten S1, S19 und S2 verbunden, andererseiis mit den Segmenten S5, S6 und S21. Diese Informationen sind in dem zweiten Speicher 44 abgespeichert. Ist jetzt der Startpunkt SP einer Fahrt, beispielsweise auf dem Segment S20 liegend, und ein Zielpunkt ZP der vorgesehenen Fahrt bekannt, der in dem dargestellten Ausführungsbeispiel auf dem Segment S29 liegt, so kann der Rechner 46 mit Hilfe der abgespeicherten Angaben, beispielsweise unter Verwendung des Ford-Moore-Algorithmus, die kürzeste Wegstrecke vom Startpunkt SP zum Zielpunkt ZP ermitteln. In dem dargestellten Ausführungsbeispiel bestünde die kürzeste Wegstrecke aus den Segmenten S20, S21, S10, S28, S29. Die zweitkürzeste Wegstrecke bestünde demgegenüber aus den Segmenten S20, S6, S27, S28, S29.

Die beiden ermittelten Wegstrecken werden in dem dritten Speicher 48 der Vorrichtung abgespeichert, und zwar so, daß eine durchfahrene Wegstrecke, beispielsweise die Wegstrecke S20 beim Eintreten in das Segment S21 aus dem dritten Speicher 48 gelöscht werden kann.

In Kombination mit einem Verkehrsrundfunkempfänger wird die erfindungsgemäße Vorrichtung zweckmäßigerweise dazu ausgenutzt, nur solche Verkehrsnachrichten zu der Wiedergabeeinrichtung 30 durchzuschalten, die für die in dem dritten Speicher 48 abgespeicherten Segmente, also für die vorgesehene Fahrtroute und wenigstens eine Alternativroute, von Interesse sind. Es ist ohne weiteres ersichtlich, daß alle logischen Verknüpfungen, auch die durch die Verknüpfungsglieder 26, 40 bewirkten, durch die Software eines Mikroprozessors, ggf. des Rechners 46, realisiert werden können.

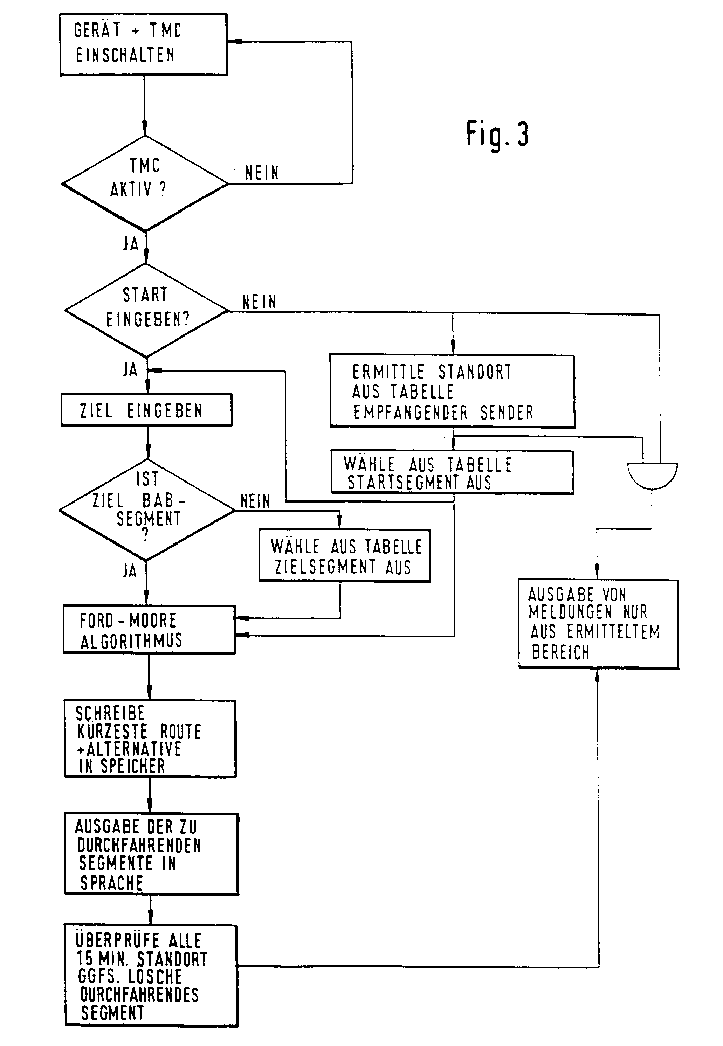

Die Funktionsweise einer erfindungsgemäßen Vorrichtung kann so gewählt werden, wie sie als Ausführungsbeispiel in der Ablaufdiagramm in Figur 3 dargestellt ist.

Nach Einschaltung des Gerätes wird in diesem Fall der separate Verkehrsfunkkanal des Geräte aktiv geschaltet.

Das Gerät überprüft dann, ob der Startpunkt SP der Route eingegeben worden ist. Ist dies der Fall, muß der Zielpunkt ZP der Route eingegeben werden. Die Eingabe des Startpunktes SP und des Zielpunktes ZP kann durch die Eingabe des betreffenden Startsegments bzw. Zielsegments, wie es in dem zweiten Speicher abgespeichert ist, erfolgen. Ist dies nicht der Fall, kann aus einer Tabelle ("Look-up-Tabelle") des ersten Speichers 16 das zugehörige Segment abgerufen und automatisch oder manuell eingegeben werden.

Ist der Startpunkt nicht eingegeben, kann die Vorrichtung zusammen mit einem RDS-Empfänger den Standort grob selbst ermitteln, indem aus der Tabelle der an diesem Standort empfangbaren Sender Rückschlüsse auf den Standort gezogen werden. Zu dem ermittelten Startpunkt kann das Gerät das zugehörige Startsegment auswählen. Liegen Startsegment und Zielsegment entsprechend der im zweiten Speicher abgespeicherten Segmente vor, kann die Vorrichtung unter Anwendung des Ford-Moore-Algorithmus die kürzeste Route und mindestens eine alternative Route ermitteln und in den dritten Speicher 48 schreiben. Zweckmäßigerweise können die für die ermittelte Route zutreffenden Autobahnsegmente (möglichst im Klartext) mit einer Ausgabevorrichtung, beispielsweise einem Sprachsynthesizer, dem Fahrer ausgegeben werden.

Das Gerät kann dann mit Hilfe der jeweils empfangbaren Sender beispielsweise alle 15 Minuten den Standort neu bestimmen und bereits durchfahrene Segmente aus dem zweiten Speicher löschen. Dadurch ist erreichbar, daß Verkehrsnachrichten, die bereits durchfahrene Segmente betreffen, nicht mehr ausgegeben werden.

Die erfindungsgemäße Vorrichtung erlaubt daher mit einfachen geräteseitigen Mitteln eine erhebliche Vereinfachung der Bedienung, da dem Fahrer die tatsächlich zu durchfahrenden Segmente nicht mehr bekannt sein müssen.

Zweckmäßigerweise wird in einer ersten Realisierungsstufe im wesentlichen nur das Autobahnnetz (BAB) mit seinen Segmenten im zweiten Speicher abgespeichert werden. Gegebenenfalls können in einer weiteren Realisierungsstufe die wichtigsten Fernstraßen und insbesondere Umgehungsrouten für Autobahnsegmente ebenfalls abgespeichert werden.

Figur 4 verdeutlicht den Aufbau eines mit Verkehrsnachrichten übersandten Orts-Codes, der hierarchisch aufgebaut ist. Eine erste Differenzierung erfolgt über Nationen-Codes. Eine weitere Differenzierung erfolgt beispielsweise für die Bundesrepublik Deutschland mit den 16 Bundesländer-Codes. Für jedes Bundesland sind mehrere Verkehrsbereichscodes vorgesehen, zu denen wiederum eine Mehrzahl von Bundesautobahn-Abschnitts-Codes gehören. Für jeden Bundesautobahn-Abschnitt gibt es eine Mehrzahl von Codes für Autobahn-Ausfahrten, Autobahnkreuze bzw. -dreiecke, Raststätten, Grenzübergänge o. ä..

Entsprechend diesen Codes enthält der erste Speicher 16 Zuordnungen der Adressen zu den Klartextangaben. Daher ist es möglich, in diesem Speicher beispielsweise die Zuordnung einer Autobahnausfahrt zu einem Autobahnabschnitt (Segment) vorzunehmen.

## Patentansprüche

1. Verkehrsrundfunkempfänger mit einem ersten Speicher (16) zum Zuordnen von durch die Verkehrsnachrichten empfangenen Adressen zu Segmenten (S1...S40) eines Straßennetzes und mit einer Wiedergabeeinrichtung (30) für die empfangenen kodierten Signale der Verkehrsnachrichten in klar verständlicher Form, gekennzeichnet durch eine Zusatzeinrichtung (42) mit einem zweiten Speicher (44) für die Länge der im ersten Speicher (16) abgespeicherten Segmente (S1 ... S40) und Adressen für an das jeweilige Segment (S1... S40) anschließende Segmente, mit einer Eingabeeinrichtung (34) für wenigstens eine Zielpunkteingabe, die einem abgespeicherten Segment (S1 ... S40) zuzuordnen ist, mit einem Rechner (46) zur Ermittlung der optimalen Strecke zum Zielpunkt (ZP) und mit einem dritten Speicher (48), in dem die zu der vom Rechner (46) ermittelten optimalen Strecke gehörenden Segmente abspeicherbar sind.

2. Empfänger nach Anspruch 1, dadurch gekennzeichnet, daß bereits durchfahrene Segmente aus dem dritten Speicher (48) löschbar sind.

3. Empfänger nach Anspruch 1 oder 2, dadurch gekennzeichnet, daß in dem dritten Speicher (48) neben den Segmenten für die optimale Strecke auch Segmente für die zweitbeste Strecke abspeicherbar sind.

4. Empfänger nach einem der Ansprüche 1 bis 3, dadurch gekennzeichet, daß die Ermittlung der optimalen Strecke unter dem Kriterium der kürzesten Weglänge erfolgt.

5. Empfänger nach einem der Ansprüche 1 bis 3, dadurch gekennzeichnet, daß die Ermittlung der optimalen Strecke unter dem Kriterium der Minimierung der summierten Produkte aus der jeweiligen Segmentlänge und einem Bewertungsfaktor erfolgt.

6. Empfänger nach Anspruch 5, dadurch gekennzeichnet, daß in dem zweiten Speicher (44) die Länge der jeweiligen Segmente multipliziert mit dem Bewertungsfaktor abgespeichert sind.

7. Empfänger nach Anspruch 5, dadurch gekennzeichnet, daß der Bewertungsfaktor eingebbar oder aus einem vierten Speicher (52) abrufbar ist.

8. Empfänger nach Anspruch 7, dadurch gekennzeichnet, daß mehrere Bewertungsfaktoren in dem vierten Speicher (52) in Abhängigkeit von typischen Gegebenheiten, wie Reisezeit, Reisetag, Wetterlage o.ä., für jedes Segment (S1 ...S40) abgespeichert sind.

9. Empfänger nach einem der Ansprüche 1 bis 8, gekennzeichnet durch eine Torschaltung, die nur solche Verkehrsnachrichten zur Wiedergabeeinrichtung (30) durchläßt, die Segmente (S1 ...S40) betreffen, die in dem dritten Speicher (48) abgespeichert sind.

10. Empfänger nach einem der Ansprüche 1 oder 9, dadurch gekennzeichnet, daß der Verkehrsrundfunkempfänger ein Identifikationssignale der Rundfunksender erkennender Empfänger ist, der eine Auswertungseinrichtung zur Ermittlung des ungefähren Standorts des Fahrzeugs aus den jeweils empfangbaren Rundfundsendern aufweist.

11. Empfänger nach Anspruch 10, gekennzeichnet durch eine Zuordnungseinrichtung für den von der Auswertungseinrichtung ermittelten Standort zu einem im ersten Speicher abgespeicherten Segment (S1 ... S40).

12. Empfänger nach einem der Ansprüche 1 bis 11, gekennzeichnet durch eine Zuordnungseinrichtung zur Zuordnung der Eingabe des Zielpunktes (ZP) zu einem abgespeicherten Segment (S1 ...S40).

13. Empfänger nach Anspruch 11 oder 12, dadurch gekennzeichnet, daß die Zuordnungseinrichtung aus einer abgespeicherten Tabelle besteht, in der zu möglichen Startund Zielpunkteingaben ein jeweils zugehöriges Segment (S1 ...S40) abgespeichert ist.

14. Empfänger nach einem der Ansprüche 1 bis 13, dadurch gekennzeichnet, daß der Verkehrsrundfunkempfänger ein Empfangsteil für einen separaten Verkehrsfunkkanel (TMC) aufweist.

15. Empfänger nach einem der Ansprüche 1 bis 14, dadurch gekennzeichnet, daß die empfangenen Verkehrsnachrichten, die die im dritten Speicher (48) abgespeicherten Segmente (S1 ...S40) betreffen, im Empfänger abgespeichert und von der Torschaltung zeitnah vor dem Befahren des betreffenden Segments (S1 ...S40) zur Wiedergabeeinrichtung durchgelassen werden.

16. Empfänger nach einem der Ansprüche 1 bis 15, dadurch gekennzeichnet, daß die in standardisierter Form empfangenen Verkehrsnachrichten in der Recheneinrichtung zur Überprüfung der ermittelten optimalen Strecke verarbeitet werden.

17. Empfänger nach Anspruch 16, dadurch gekennzeichnet, daß mit der in standardisierter Form empfangenen Verkehrsnachricht der Bewertungsfaktor für den betreffenden Streckenabschnitt (S1 ...S40) veränderbar ist.

18. Empfänger nach einem der Ansprüche 1 bis 17, dadurch gekennzeichnet, daß die Zusatzeinrichtung (42) in Form einer in den Verkehrsrundfunkempfänger einschiebbaren und auswechselbaren Chipkarte realisiert ist.

19. Empfänger nach Anspruch 18, dadurch gekennzeichnet, daß die Chipkarte auch den ersten Speicher (16) umfaßt.

20. Empfänger nach einem der Ansprüche 1 bis 19, dadurch gekennzeichnet, daß die zu der ermittelten optimalen Strecke gehörenden Segmente mit der Wiedergabeeinrichtung (30) ausgebbar sind.

21. Empfänger nach einem der Ansprüche 1 bis 20, gekennzeichnet durch eine akustische Wiedergabeeinrichtung (30), die einen Sprachsynthesizer umfaßt.

## Claims

1. Traffic broadcast radio receiver having a first memory (16) for allocation of addresses received by means of the traffic messages to segments (S1...S40) of a road network and having a reproduction device (30) for the received coded signals from the traffic messages in clearly understandable form, characterized by an additional device (42) having a second memory (44) for the length of the segments (S1...S40) stored in the first memory (16), and addresses for segments which follow the respective segment (S1...S40), having an input device (34) for at least one destination point input, which can be assigned to a stored segment (S1...S40), having a computer (46) for determining the optimum route to the destination point (ZP), and having a third memory (48) in which the segments which are part of the optimum route determined by the computer (46) can be stored.

2. Receiver according to Claim 1, characterized in that segments which have already been completed can be erased from the third memory (48).

3. Receiver according to Claim 1 or 2, characterized in that segments for the second best route can be stored in the third memory (48), in addition to the segments for the optimum route.

4. Receiver according to one of Claims 1 to 3, characterized in that the optimum route is determined on the basis of the criterion for the shortest route length.

5. Receiver according to one of Claims 1 to 3, characterized in that the optimum route is determined on the basis of the criterion of minimizing the added products of the respective segment length and a weighting factor.

6. Receiver according to Claim 5, characterized in that the second memory (44) is used to store the length of the respective segments multiplied by the weighting factor.

7. Receiver according to Claim 5, characterized in that the weighting factor can be entered or can be called up from a fourth memory (52).

8. Receiver according to Claim 7, characterized in that a plurality of weighting factors are stored in the fourth memory (52) as a function of typical characteristics, such as the travelling time, day of travel, weather situation or the like, for each segment (S1...S40).

9. Receiver according to one of Claims 1 to 8, characterized by a gate circuit which passes through only those traffic messages to the reproduction device (30) which relate to segments (S1...S40) which are stored in the third memory (48).

10. Receiver according to one of Claims 1 or 9, characterized in that the traffic broadcast radio receiver is a receiver which identifies identification signals from the broadcast radio transmitters and has an evaluation device for determining the approximate location of the vehicle from the broadcast radio transmitters which can in each case be received.

11. Receiver according to Claim 10, characterized by an allocation device for allocating the location determined by the evaluation device to a segment (S1...S40) stored in the first memory.

12. Receiver according to one of Claims 1 to 11, characterized by an allocation device for allocating the input of the destination point (ZP) to a stored segment (S1...S40).

13. Receiver according to Claim 11 or 12, characterized in that the allocation device comprises a stored table in which a respectively associated segment (S1...S40) is stored for possible start point and destination point inputs.

14. Receiver according to one of Claims 1 to 13, characterized in that the traffic broadcast radio receiver has a receiving section for a separate traffic radio channel (TMC).

15. Receiver according to one of Claims 1 to 14, characterized in that the received traffic messages which relate to the segments (S1...S40) stored in the third memory (48) are stored in the receiver and are passed through to the reproduction device by the gate circuit shortly before driving into the relevant segment (S1...S40).

16. Receiver according to one of Claims 1 to 15, characterized in that the traffic messages, which are received in standardized form, are processed in the calculation device in order to check the determined optimum route.

17. Receiver according to Claim 16, characterized in that the weighting factor for the relevant route section (S1...S40) can be varied by the traffic message, which is received in standardized form.

18. Receiver according to one of Claims 1 to 17, characterized in that the additional device (42) is implemented in the form of a smart card which can be pushed into the traffic broadcast radio receiver and is replaceable.

19. Receiver according to Claim 18, characterized in that the smart card also includes the first memory (16).

20. Receiver according to one of Claims 1 to 19, characterized in that the segments that are part of the determined optimum route can be output to the reproduction device (30).

21. Receiver according to one of Claims 1 to 20, characterized by an audible reproduction device (30), which includes a voice synthesizer.

## Revendications

1. Récepteur radiophonique de circulation comprenant une première mémoire (16) pour associer les adresses reçues par les informations de circulation aux segments (S1-S40) d'un réseau routier, et une installation de reproduction (30) pour reproduire les signaux codés et reçus par les informations de circulation, pour les reproduire sous une forme claire à comprendre,
caractérisé par
une installation complémentaire (42) ayant une seconde mémoire (44) relative à la longueur des segments (S1-S40) mis en mémoire dans la première mémoire (16) et les adresses des segments adjacents aux segments respectifs (S1...S40), avec une installation d'entrée (34) pour au moins un point de destination qui peut être attribué aux segments (S1...S40) déjà mis en mémoire, un calculateur (46) pour déterminer le chemin optimum vers la destination (ZP), et une troisième mémoire (48) dans laquelle s'enregistrent les segments appartenant au chemin optimum par rapport à ceux déterminés par le calculateur (46).

2. Récepteur selon la revendication 1,
caractérisé en ce que
les segments déjà parcourus peuvent être effacés de la troisième mémoire (48).

3. Récepteur selon la revendication 1 ou 2,
caractérisé en ce que
dans la troisième mémoire (48), à côté des segments du chemin optimum, on enregistre également les segments correspondant au second chemin optimum.

4. Récepteur selon l'une des revendications 1 à 3,
caractérisé en ce qu'
on détermine le chemin optimum en utilisant le critère de la longueur de chemin la plus faible.

5. Récepteur selon l'une des revendications 1 à 3,
caractérisé en ce qu'
on détermine le chemin optimum en appliquant le critère de la minimisation des produits sommés à partir de la longueur de segment respective et d'un coefficient de pondération correspondant.

6. Récepteur selon la revendication 5,
caractérisé en ce que
dans la seconde mémoire (44) sont enregistrées les longueurs des segments respectifs multipliées par les coefficients de pondération.

7. Récepteur selon la revendication 5,
caractérisé en ce que
le coefficient d'exploitation est introduit ou peut être appelé dans une quatrième mémoire (52).

8. Récepteur selon la revendication 7,
caractérisé en ce que
plusieurs coefficients d'exploitation sont enregistrés dans la quatrième mémoire (52) en fonction des données caractéristiques telles que le temps du voyage, la durée du voyage, la situation météorologique etc., pour chaque segment (S1-S40).

9. Récepteur selon l'une des revendications 1 à 8,
caractérisé par
un circuit de porte qui ne laisse passer que les informations de circulation routière vers l'installation de reproduction (30) qui concernent les segments (S1-S40) mis en mémoire dans la troisième mémoire (48).

10. Récepteur selon l'une des revendications 1 ou 9,
caractérisé en ce que
le récepteur radio de circulation est un récepteur reconnaissant les signaux d'identification de l'émetteur radio, ce récepteur comportant une installation d'exploitation pour déterminer l'emplacement approximatif du chemin à partir des émetteurs radio reçus, respectifs.

11. Récepteur selon la revendication 10,
caractérisé par
une installation d'association pour l'emplacement déterminé par l'installation d'exploitation à un segment (S1...S40) mis en mémoire dans une première mémoire.

12. Récepteur selon l'une des revendications 1 à 11,
caractérisé par
une installation supplémentaire pour associer l'entrée du point de destination (ZP) à un segment mis en mémoire (S1-S40).

13. Récepteur selon la revendication 11 ou 12,
caractérisé en ce que
l'installation d'association se compose d'un tableau mis en mémoire, dans lequel sont enregistrés les points de départ et les points de destination respectifs dans un segment (S1...S40) correspondant respectif.

14. Récepteur selon l'une quelconque des revendications 1 à 13,
caractérisé en ce que
le récepteur radio de circulation comprend une partie de réception pour un canal radio de circulation séparé (TMC).

15. Récepteur selon l'une des revendications 1 à 14,
caractérisé en ce que
les informations de circulation reçues qui concernent des segments (S1...S40) mis en mémoire dans la troisième mémoire (48), sont enregistrées dans le récepteur et transmises par le circuit de porte peu de temps avant le parcours du segment concerné (S1...S40) vers l'installation de reproduction.

16. Récepteur selon l'une des revendications 1 à 15,
caractérisé en ce que
les informations de circulation routière reçues sous une forme normalisée sont traitées dans l'installation de calcul pour contrôler le chemin optimum déterminé.

17. Récepteur selon la revendication 16,
caractérisé en ce qu'
avec l'information de circulation routière reçue sous une forme normalisée, on modifie le coefficient de pondération du segment de chemin concerné (S1...S40).

18. Récepteur selon l'une des revendications 1 à 17,
caractérisé en ce que
l'installation complémentaire (42) se réalise sous la forme d'une carte à puce qui se glisse et s'échange dans le récepteur radio.

19. Récepteur selon la revendication 18,
caractérisé en ce que
la carte à puce comprend également la première mémoire (16).

20. Récepteur selon l'une des revendications 1 à 19,
caractérisé en ce que
les segments appartenant au chemin optimum déterminé sont reproduits par l'installation de reproduction (30).

21. Récepteur selon l'une des revendications 1 à 20,
caractérisé par
une installation de reproduction acoustique (30) comprenant un synthétiseur vocal.
